# FASCICULE DE BREVET EUROPEEN

(11) **EP 2 483 140 B1**
(45) Date de publication et mention de la délivrance du brevet: **10.07.2013**
(21) Numéro de dépôt: 10769033.1
(22) Date de dépôt: 27.09.2010
(51) Int. Cl.: B62K 13/00, B62K 15/00, B62B 3/14

(54) **CYCLE PLIABLE TRANSFORMABLE EN CHARIOT A PROVISIONS**
IN EIN EINKAUFSWAGEN UMWANDELBARES KLAPPRAD
FOLDABLE CYCLE CONVERTIBLE INTO A SHOPPING TROLLEY

(30) Priorité: 28.09.2009 FR 0904606
(43) Date de publication de la demande: 08.08.2012
(73) Titulaire: Peytour, Norbert, 42600 Montbrison (FR)
(72) Inventeur: Peytour, Norbert, 42600 Montbrison (FR)
(74) Mandataire: Perrier, Jean-Pierre
(86) Numéro de dépôt international: PCT/FR2010/052021
(87) Numéro de publication internationale: WO 2011/036424

(56) Documents cités:
- CN-Y- 200 964 161
- FR-A- 2 926 961
- JP-A- 2005 119 450
- JP-A- 2009 143 340
- US-A- 4 917 396
- US-A1- 2007 057 483

## Description

L'invention concerne le domaine du transport de charges et provisions diverses, tel que des achats effectués dans des commerces, entre le commerce et un local, avec éventuellement un transfert dans le coffre d'un véhicule, en prenant en considération les nouvelles contraintes découlant de la protection de l'environnement et de la réduction de la consommation des énergies.

Elle vise plus particulièrement les moyens organisés autour d'une structure de cycle pliable comprenant deux parties séparables, à savoir, une partie arrière équipée des moyens d'entraînement et de moyens d'assise, et une partie avant avec guidon et panier à provision, ces deux parties étant solidarisables par des moyens de liaison actionnables manuellement.

Les documents de l'état de la technique décrivent des véhicules, qui, parfaitement adaptés au transport de charges, ne peuvent pas être utilisés tels quels, soit en raison de leur encombrement, soit en raison de la nécessité de séparer leurs composants et d'en stocker un hors du magasin, en ouvrant ainsi une possibilité de vol, total ou partiel, ou de détérioration.

Il en est ainsi dans le document US5011169 qui décrit un véhicule composé d'un chariot traditionnel, pouvant circuler dans un commerce en libre service, auquel est accouplé la partie arrière d'un cycle à deux roues arrière. Pour utiliser le chariot dans le commerce il faut le séparer de sa partie arrière, qui doit temporairement être laissée à l'extérieur, avec les risques de vol ou de détériorations, et qui par ailleurs, est trop encombrante pour être chargée dans le véhicule utilisé pour le transport des commissions.

Les documents EP0585736 et EP1690782 décrivent des véhicules urbains, en forme de tricycles équipés d'un caisson avant de réception des charges, ne pouvant pas être utilisés dans un magasin et non structurés pour se démonter en éléments insérables dans le coffre d'un véhicule.

Le document CN200964161 décrit un vélo pliable dont la partie avant est munie d'un panier à provision et dont la partie arrière, démontable, peut être rabattue contre celle avant, de manière que les deux roues soient parallèles. La partie avant est équipée d'un chariot escamotable, formant un troisième point d'appui, améliorant la stabilité des deux parties repliées et facilitant la traction à la main de l'ensemble. Il s'agit en fait d'un vélo pliant aménagé qui n'offre qu'un confort restreint à un cycliste de petite taille et qui, en position de chariot, n'offre qu'une stabilité très relative en raison de la proximité des points de roulement sur le sol.

L'objet de l'invention est de fournir un cycle qui satisfasse aux contraintes suivantes :
- former un vélo pliable, confortable dans son usage de cycle et dont la partie avant B peut, en configuration de chariot, être utilisée assemblée avec la partie arrière A,
- être composé d'éléments rangeables dans le coffre d'un véhicule, et dont les opérations d'assemblage, de démontage et de transformation, entre la configuration « cycle» et celle « chariot », s'effectuent aisément et sans efforts,
- former un chariot qui, composé de la seule partie avant B ou de ses deux parties A et B réunies, présente un encombrement permettant son déplacement dans les allées d'un magasin, qu'il soit tiré ou poussé,
- présenter, dans sa configuration de chariot réunissant ses deux parties A et B, d'une part, l'opportunité d'empêcher le vol ou la détérioration de la partie arrière A, et, d'autre part, une parfaite stabilité, même en présence d'une masse importante dans ses moyens de réception des charges portés par la partie avant B.

A cet effet, dans le cycle pliable selon l'invention, la partie avant B :
- a) repose sur deux roues, montées libres en rotation autour d'axes horizontaux espacées transversalement, ces axes étant portés par des moyens qui, permettant le pivotement des roues autour d'axes verticaux dans un châssis transversal, sont liés en rotation l'un à l'autre et au guidon,
- b) présente en saillie vers l'arrière du châssis, et de manière distincte des moyens C de liaison avec sa partie arrière A, des moyens D de réception et de maintien d'un élément tubulaire de sa partie arrière, alors à l'état démonté,
- et, c) supporte une béquille articulée E pouvant occuper :
   ● soit une position de rangement, dans laquelle elle est escamotée,
   ● soit une position d'utilisation, dans laquelle elle est déployée et vient en contact avec le sol par l'intermédiaire d'un sabot ou berceau transversal,
le dit sabot ou berceau étant apte à recevoir la roue arrière du cycle, quand cette partie arrière du cycle est séparée de la partie avant et est plaquée contre cette dernière.

Pour passer de la configuration cycle à la configuration chariot, l'utilisateur doit désolidariser les deux parties du cycle, amener la béquille en position d'utilisation, puis, s'il souhaite emmener la partie arrière avec le chariot, insérer la roue arrière dans le sabot en même temps qu'il dispose un élement tubulaire du cadre arrière dans les moyens de maintien prévus sur la partie avant. Après blocage des moyens de maintien, les deux parties du cycle forment un ensemble, compact, d'autant plus stable que les roues avant ont un grand diamètre et sont espacées longitudinalement du sabot.

L'utilisateur peut alors circuler dans les allées d'un magasin en déposant ses achats dans le panier à provision et en n'ayant pas à se préoccuper de la sécurisation de la partie arrière du cycle, puisque celle ci est portée par le chariot.

Dans une forme d'exécution de l'invention, la béquille comprend :
- un premier levier articulé par son extrémité avant sur le châssis avant du cycle, avec possibilité de pivotement dans le plan vertical,
- un deuxième levier, dont l'extrémité avant est articulée transversalement à l'extrémité arrière du premier levier, et dont l'extrémité arrière porte le sabot par une articulation longitudinale permettant, en position d'appui au sol, d'amener ce sabot transversalement de part et d'autre du plan médian longitudinal du chariot,
- des moyens de verrouillage du premier levier dans une position « cycle », dans laquelle le sabot est sous le cadre et dans son alignement vertical,
- et, des moyens à actionnement manuel de déverrouillage des moyens de verrouillage précité.

Grâce à cet aménagement, dans la configuration « cycle », le sabot est maintenu en long sous le cadre de la partie arrière, parallèlement à celui ci, et ne gène pas le mouvement de pédalage, alors que dans la configuration « chariot », il est en travers, perpendiculairement à ce cadre, et par son appui sur le sol, en arrière des roues, il donne une trés bonne stabilité au chariot.

Avantageusement, le sabot comporte au moins une roulette apte à venir en contact avec le sol pour former, avec les roues de la partie avant du cycle, d'une part, un stabilisateur et, d'autre part un troisième point de roulement, espacé des roues avant.

Dans une autre forme d'exécution, la béquille E comprend :
- une patte coudée saillant vers le bas à partir de l'arceau transversal avant d'un panier lié au châssis de la partie avant B du cycle, et
- un berceau de réception de la roue arrière du cycle, le dit berceau étant articulé autour d'un axe transversal et dans des paliers disposés à l'arrière du panier avec possibilité de pivotement entre deux positions verrouillées, mais déverrouillable manuellement, une position escamotée, repliée contre le panier, et une position d'utilisation dans laquelle les roulettes dont il est muni sont en appui sur le sol.

D'autre caractéristiques et avantages ressortiront de la description qui suit, en référence au dessin schématique annexé, dans lequel :
Figure 1 est une vue en perspective d'une première forme d'exécution du cycle quand il est en configuration « cycle » ;
Figures 2 et 3 sont des vues en perspective du même cycle quand il est en configuration de « chariot » et, respectivement, avec un panier de commission et sans panier, console rabattue ;
Figure 4 est une vue en élévation par l'arrière de la partie avant du cycle, quand celle ci est seule ;
Figures 5 et 6 sont des vues en perspective de la partie avant, sans la partie arrière, montrant deux façons de déplacer le chariot à commission de figure 4 ;
Figure 7 est une vue partielle du tube de direction du châssis, montrant, à échelle agrandie, une forme d'exécution des moyens de liaison des deux parties du cycle et des moyens de maintien de la partie arrière contre la partie avant ;
Figures 8, 9 et 10 sont des vues à échelle agrandie d'une forme d'exécution des moyens de liaison des deux parties du cycle, respectivement, en vue de coté à l'état monté, en perspective lors du démontage et à l'état démonté ;
Figure 11 est une vue partielle en perspective montrant une forme d'exécution des moyens de verrouillage et de déverrouillage associés à la béquille ;
Figure 12 est une vue partielle en coupe longitudinale du verrou à ressort ;
Figures 13 et 14 sont des vues en perspective montrant la béquille et ses moyens de verrouillage, respectivement, quand elle est repliée et quand elle est déployée ;
Figures 15 à 17 sont des vues partielles en perspective de coté d'une autre forme d'exécution du cycle, quand il est respectivement en position cycle, en début de passage en position chariot et lors de la séparation de sa partie arrière d'avec sa partie avant ;
Figure 18 est une vue partielle par l'avant, montrant à échelle agrandie une autre forme d'exécution de la béquille quand elle est en position d'utilisation ;
Figure 19 est une vue partielle en perspective et à échelle réduite montrant la partie avant avec sa colonne de direction ;
Figure 20 est une vue similaire à la figure 19, mais dans une variante dans laquelle le châssis est structuré pour permettre le rabattement contre lui des roues avant ;
Figure 21 est une vue de face en élévation du cycle des figures 15 à19, quand il est en position de chariot, avec la partie avant supportant la partie arrière.

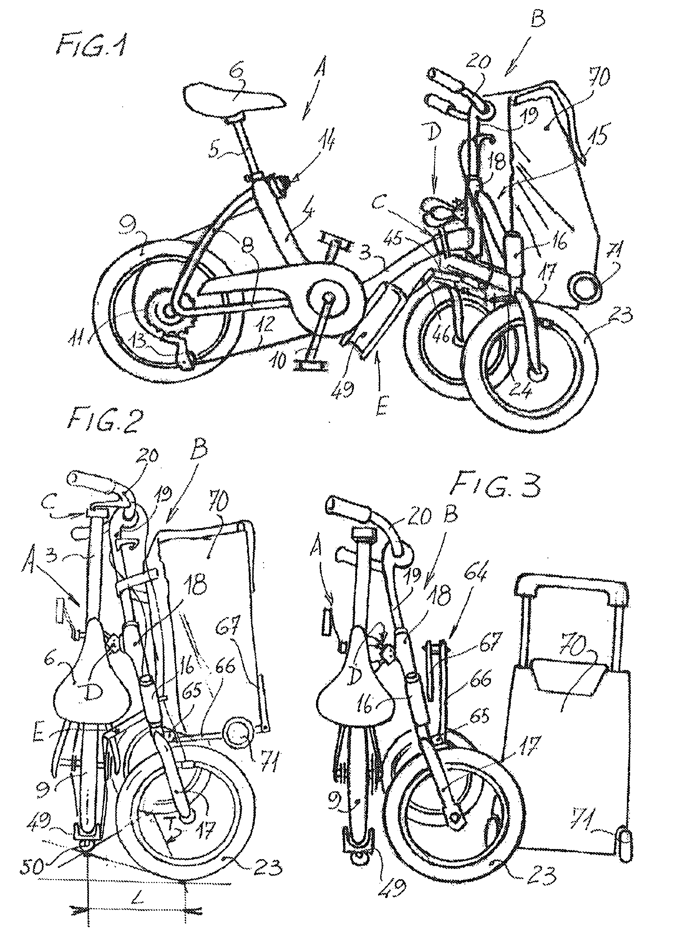

Comme montré de manière générale à la figure 1, le cycle selon l'invention est composé d'une partie arrière A et d'une partie avant B.

La partie arrière A comprend, de façon connue, l'essentiel du cadre 2 du cycle, à savoir :
- le tube diagonal inférieur 3,
- le montant de selle 4, dans lequel la tige 5, portant la selle 6, est montée coulissante et peut être bloquée par un moyen 7 à serrage manuel,
- les haubans 8, portant la roue arrière 9,
- et la boite de pédalier, non représentée, pour le mécanisme d'entrainement comprenant un pédalier 10, relié aux pignons arrière 11, par une chaine 12, et un changement de vitesses 13, dont la commande 14 est disposée sur le montant de selle 4.

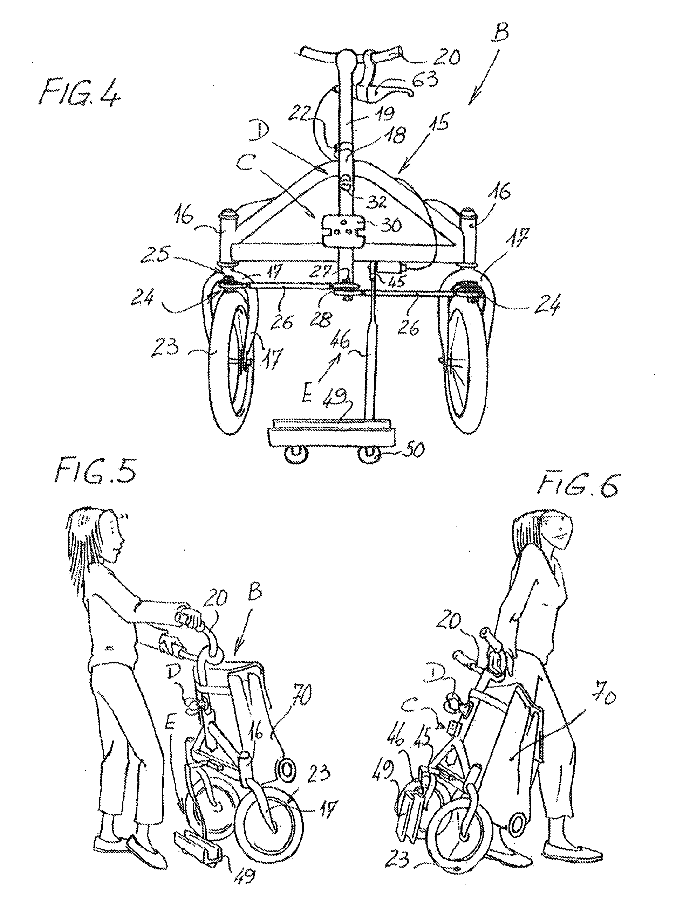

Comme montrée en détail à la figure 4, la partie avant B du cycle selon l'invention est essentiellement formée par un châssis triangulaire 15, disposé verticalement et transversalement et portant, de chaque coté, un palier vertical 16 de guidage en rotation de l'une des deux têtes cylindriques des fourches 17, et, en partie centrale, un fourreau cylindrique de direction 18. Une tige 19, montée libre en rotation dans le fourreau 18, porte la potence, ou équivalent, par laquelle le guidon 20 est fixé. De façon connue, la tige de potence 19 est montée coulissante dans le tube 18 avec possibilité de blocage par un moyen 22 (figure 4) à serrage manuel, soit pour ajuster la hauteur de la potence à la taille du cycliste, soit pour réduire l'encombrement en position de rangement.

Chacune des deux fourches 17 porte l'axe d'une roue avant 23 ayant un diamètre compris entre 14 et 20 pouces, et est solidaire d'un levier 24, tourné vers l'arrière. Chaque levier 24 sert à l'articulation, par un axe vertical 25, de l'une des extrémités d'une biellette 26, sensiblement horizontale, dont l'autre extrémité est articulée, par un autre axe vertical 27, à un levier 28 lié en rotation à la tige de direction 19. Ainsi, les deux roues 23 pivotent du même angle au même moment.

Cette figure 4 montre aussi que le fourreau de direction 18 porte une platine 30, sensiblement verticale, tournée vers l'arrière et constituant l'un des éléments des moyens de liaison C entre les parties A et B du cycle. Il porte aussi deux mâchoires 32 tournées vers l'arrière et constituant les moyens D de maintien de la partie arrière A du cycle, quand celui ci est en configuration de chariot.

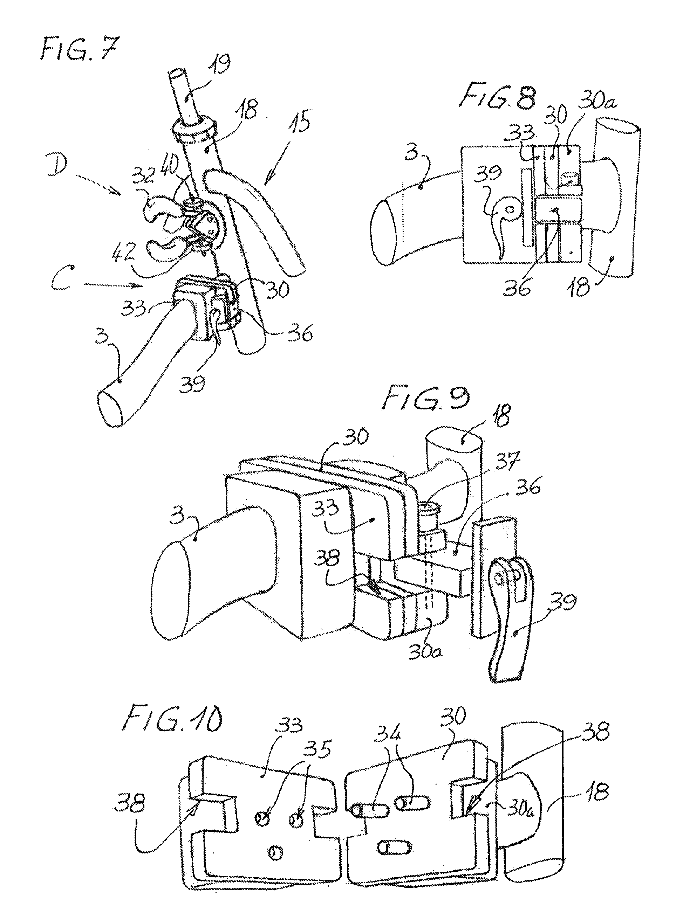

Comme montré plus en détail aux figures 7 à 10, les moyens C de liaison comprennent aussi une platine 33, sensiblement verticale, tournée vers l'avant et soudée à l'extrémité du tube diagonal 3 du cadre.

Au moins l'une des deux platines, par exemple celle 30, porte des tenons 34 saillant de sa face et aptes à pénétrer dans des puits 35 ou alésages traversant ménagés dans l'autre platine 33. Ces tenons et puits assurent le positionnement réciproque des parties assemblables du cycle, mais aussi le transfert des efforts et réactions entre ces deux parties.

Dans la forme d'exécution représentée, les moyens de liaison entre les deux platines 30-33 sont constitués par deux leviers latéraux 36, articulés par l'une de leurs extrémités autour d'un axe vertical 37 porté par l'embase 30a de la platine 30. Chacun des leviers 36 s'encastre dans des encoches 38 des platines 30 et 33 et porte à son extrémité libre un moyen de serrage des deux platines, tel qu'un levier à excentrique 39.

Ces moyens connus peuvent être remplacés par tous autres moyens actionnables manuellement et procurant une liaison mécanique entre les deux platines.

La figure 7 montre que les mâchoires 32 des moyens D de maintien sont disposées angulairement en fonction de la position occupée par l'extrémité du tube diagonal 3 quand l'appareil est en configuration de chariot. Les deux mâchoires 32 sont associées à des moyens assurant leur rapprochement et, par exemple, à une tige transversale 40 sur les extrémités de laquelle se vissent deux écrous 42.

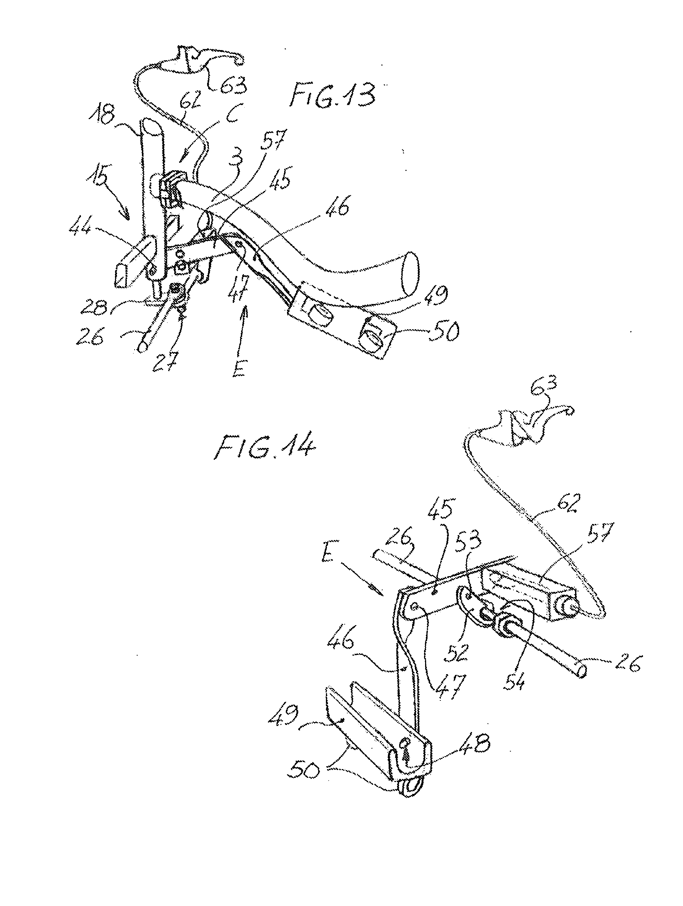

La partie avant B du cycle porte aussi une béquille E comprenant, comme montré aux figures 4, 13 et 14 :
- un premier levier longitudinal 45, articulé à la base du tube de direction 18 par son extrémité avant et autour d'un axe horizontal transversal 44, visible à la figure13, pour pouvoir osciller dans le plan vertical,
- un deuxième levier 46 dont l'extrémité avant est articulée sur le premier levier 45 et autour d'axe transversal 47, (figures 13 et 14), et dont la partie arrière est vrillée à 90 degrés pour donner une orientation longitudinale à l'axe 48 porté par son extrémité arrière, et visible figure 14,
- un sabot 49 qui est articulé sur l'axe 48.

Le sabot 49 est constitué par un profilé en forme générale de U formant un berceau apte à recevoir et maintenir le pneumatique de la roue arrière. Sa longueur est supérieure à la zone de contact avec la roue pour, en configuration chariot, pouvoir s'étendre transversalement de part et d'autre du plan médian longitudinal et vertical du cycle, comme montré figure 4.

Ce sabot porte au moins une et de préférence deux roulettes 50, orientables librement.

Les figures 1 et 13 montrent que, grâce à la structure vrillée du levier 46 et à l'orientation de l'articulation 48 de ce levier, quand le véhicule est en configuration « cycle », le sabot 49 peut être disposé longitudinalement sous le tube diagonal 3, alors que, en configuration « chariot » et comme montré aux figures 4, 5 et 14, il peut être orienté manuellement pour qu'il soit transversal. Dans ce cas, il est disposé en arrière des roues avant 23 et à une distance L, ayant une valeur comprise entre 0,25 et 0,40 mètre. Il forme ainsi avec les points d'appui des roues 23 sur le sol, un triangle T, visible figure 2 et procurant une très bonne stabilité au chariot.

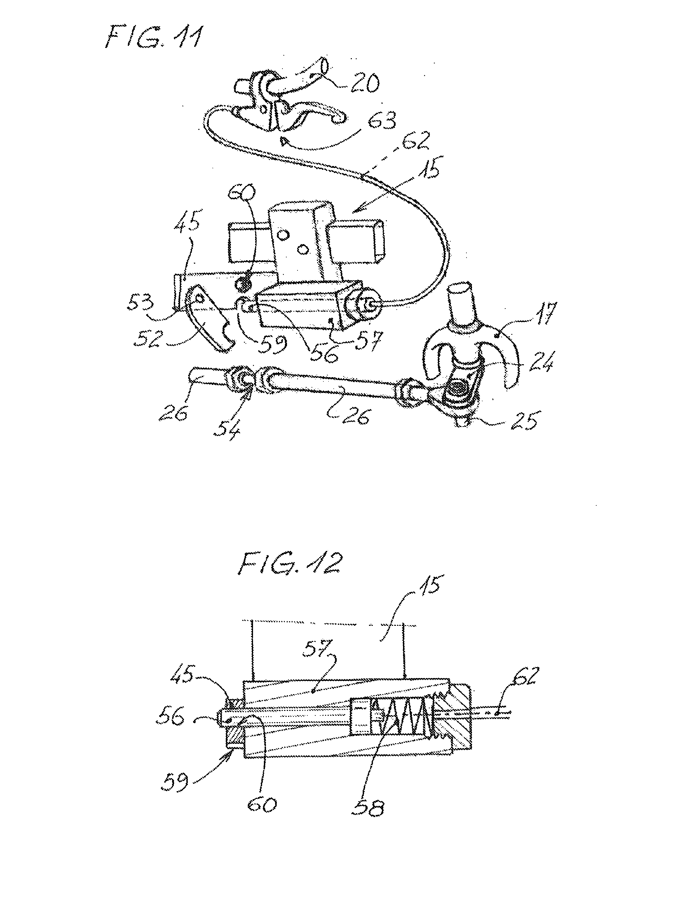

Le mécanisme de la béquille E comprend aussi un verrou 52 qui est articulé par un axe transversal 53 sur le premier levier 45. Comme montré aux figures 11 et 14 la partie inférieure du verrou 52 est en forme de crochet et est tournée vers l'avant de manière à pouvoir venir dans une gorge 54 de l'une des biellettes 26.

Quand il est dans la gorge 54, le verrou 52 s'oppose à tous mouvements des biellettes, donc à toute modification intempestive de l'orientation des roues avant 23 et à tout changement de direction du véhicule. Ainsi, lors du déplacement du chariot, l'effort communiqué au guidon 20 est sans effet sur les roues et sur la directivité du déplacement.

Bien entendu, cette fonction ne présente un intérêt qu'en configuration « chariot » et peut être dangereuse en configuration « cycle ».

Pour empêcher tout accident, consécutif au blocage de la direction, quand le véhicule est en configuration cycle, la longueur du verrou 52 est choisie pour qu'il ne puisse pénétrer dans la gorge 54 que quand le levier 45 est dans la position inclinée mettant le sabot 49 en appui sur le sol.

Par ailleurs, pour s'opposer à tout accident par une chute du sabot 49 sur le sol quand l'appareil est en configuration « cycle », chute pouvant gêner le mouvement de pédalage du cycliste, les mouvements du levier 45 sont verrouillés par un dispositif comprenant, comme montré en détail aux figures 11 et 12, un doigt 56 monté coulissant dans un corps 57 solidaire du châssis 15. Ce doigt est sollicité en permanence par un ressort de rappel 58, chassant hors du corps 57 son extrémité en forme de pêne, pour qu'elle vienne soit dans une gâche 59 formée dans le premier levier 45, pour assurer le calage de la béquille en position pliée sous le cadre, soit dans une autre gâche 60, pour caler la béquille en position dépliée.

Le déverrouillage, c'est à dire le retrait du pêne pour qu'il échappe de l'une ou l'autre des gâches 59 ou 60, est assuré par un câble 62 dont une extrémité 62a est accrochée au doigt 56 et dont l'autre extrémité est liée à une poignée d'actionnement 63, disposée sur le guidon 20 ou sur une autre structure de la partie avant B.

Enfin, la partie avant B comporte en avant du fourreau de direction 18 une console de portage 64 comprenant une base 65 fixée à ce tube 18, un plateau 66 articulé sur la base et pouvant occuper une position horizontale de réception des charges et commissions ou être rabattu verticalement contre cette base, et, éventuellement, un rebord 67 pouvant être rabattu contre le plateau, (figure 3) ou être dressé perpendiculairement à ce plateau (figure 2).

Cette console peut être utilisée seule mais, de préférence, elle soutient un sac ou panier 70 équipé de roulettes 71 et pouvant lui même être utilisé pour transporter des charges entre différents niveaux d'un magasin, quand le chariot ne peut pas être amené à un niveau différent.

Les deux parties du cycle peuvent aussi être équipées de divers moyens repliables, limitant le volume général du chariot, tels que pédales rabattables, guidon repliable, tige de selle et de direction télescopables dans leur tube. De même, pour faciliter le rangement du cycle dans un volume réduit, tel que placard ou coffre d'un véhicule, divers éléments peuvent être liés par des articulations, comme par exemple les fourches par rapport à leur pivot.

Dans la configuration « cycle », montrée à la figure 1, le cycle peut être utilisé pour des déplacements entre une automobile et un magasin, ou de manière plus sportive, entre un lieu de résidence et un magasin, ou inversement.

Pour passer en configuration « chariot » avec réunion des parties A et B, il faut procéder de la façon suivante :
- actionner manuellement les moyens de liaison C pour séparer la partie avant B de la partie arrière A du cycle,
- actionner la poignée 63 du guidon 20 pour déverrouiller la béquille E et amener le sabot 49, dans la position montrée à la figure 4,
- dresser verticalement la partie arrière A en l'amenant contre la partie avant, afin d'engager la roue arrière 9 dans le sabot 49, comme montré aux figures 2 et 3, et de plaquer la partie extrême du tube 3 du cadre contre les moyens de maintien D,
- puis, actionner les moyens 40-42 de serrage des mâchoires 32 sur le tube 3.

Ces opérations sont simples, faciles et très rapides à réaliser. Elles permettent d'obtenir un chariot très stable, pouvant être déplacé en étant poussé par le guidon, comme montré à la figure 5, ou en étant tiré comme montré à la figure 6 et portant ou non le panier 70.

Ces figures 5 et 6, montrent aussi que la partie avant B peut être utilisée seule en chariot, donc sans la partie arrière A, et soit avec la béquille E en position dépliée pour stabiliser le chariot à chaque arrêt de chargement, soit avec la béquille en position pliée, par exemple pour un déplacement entre un magasin et un lieu de déchargement ou de remontage des parties du cycle.

Il ressort de la description qui précède que le cycle transformable selon l'invention satisfait à la problématique exposée dans l'introduction et peut assurer diverses fonctions dans un contexte de modifications des comportements humains et de protection de l'environnement.

Il constitue de ce fait un moyen d'éco mobilité intermodale.

Ainsi, pour ne pas polluer le coeur d'une zone urbaine, le cycle peut être amené, à l'état démonté dans le coffre d'un véhicule, sur un parking périphérique où ses deux parties A et B sont assemblées, ou à proximité du lieu d'utilisation, par tout autre moyens de transport collectif. En configuration « cycle », il permet à l'usager de se rendre au centre de ville ou à un magasin, sans engendrer une quelconque pollution, l'énergie consommée n'étant que celle musculaire du cycliste.

Devant le magasin, le cycle est configuré en un « chariot », dont l'encombrement réduit permet sa circulation dans les allées du magasin pour assurer la collecte des achats dans le panier.

En sortie de magasin, le chariot peut être laissé en l'état pour aller à pieds vers un autre magasin ou aller jusqu'à un lieu de stationnement proche, ou alors être reconfiguré en cycle pour éviter à l'usager de marcher trop longuement.

Quand les courses sont terminées, sa configuration en cycle permet à l'usager soit de rentrer directement à son domicile, s'il réside à une distance de un à quelques kilomètres, soit de regagner le parking périphérique pour décharger les commissions et ranger les composants du cycle dans le coffre du véhicule, ou d'utiliser les transports collectifs sans perturbation pour les autres usagers.

Ainsi, le cycle selon l'invention, par sa combinaison cycle-chariot procure une nouvelle solution de mobilité urbaine et péri urbaine complémentaire à la voiture et aux transports collectifs.

Par ailleurs, et quand l'usage en configuration « cycle» ne se justifie pas, il est possible de ne transporter dans le coffre et jusqu'au lieu de stationnement près de la zone d'achat, que la partie avant B du cycle, puisqu'elle comporte la béquille assurant la stabilité du chariot et les moyens facilitant la directivité de ce dernier.

Dans cette configuration « chariot », composée de la seule partie avant B ou des deux parties A et B, le gain de stabilité apporté à la personne qui s'appuie sur le guidon, peut être utilisé comme appareil d'aide à la marche pour les personnes à mobilité réduite, en complément de sa fonction de collecteur d'achats.

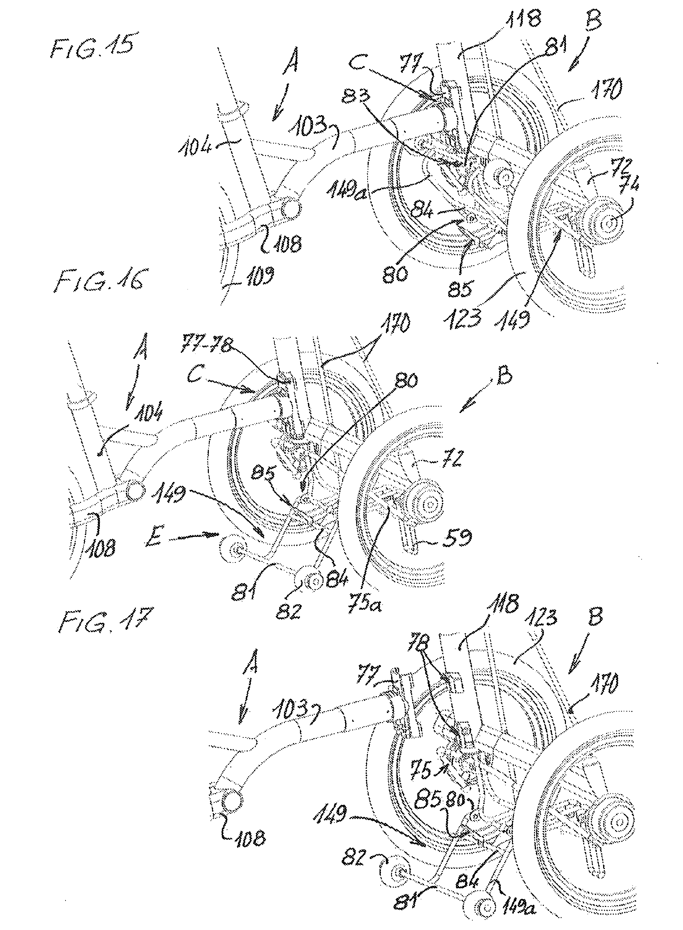

La forme d'exécution représentée aux figures 15 à 21 diffère de la précédente par :
- la structure générale de la partie arrière A et celle de la partie avant B,
- les moyens de liaison C,
- les moyens D de maintien de la partie arrière A en position de chariot,
- et par la forme de la béquille E.

Ces différences sont mises en évidence dans la description qui suit et dans laquelle :
- les pièces identiques en forme et fonction porteront les mêmes références numériques,
- les pièces assurant la même fonction mais avec une forme différente seront référencées avec la même référence mais majorée de 100,
- et les pièces et éléments nouveaux seront référencés à partir de 72.

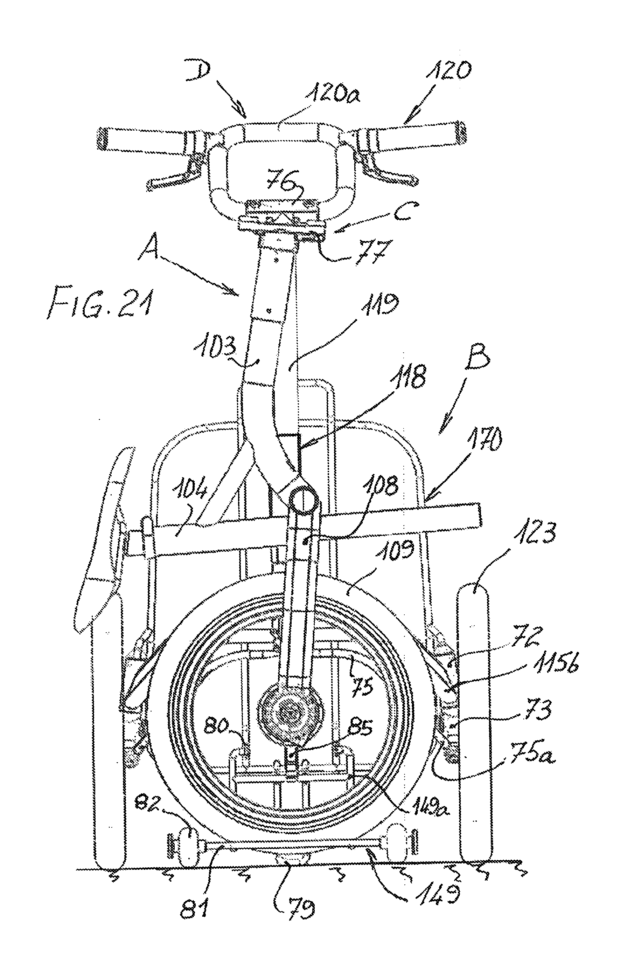

Comme le montrent les figures 15 et 21 la partie arrière A du cadre est composée d'un tube inférieur 103 partant de la boite de pédalier à laquelle aboutissent le montant de selle 104 et le bras arrière 108. Ce dernier est unique, de manière à réduire l'encombrement transversal de cette partie et le volume du chariot montré à la figure 21.

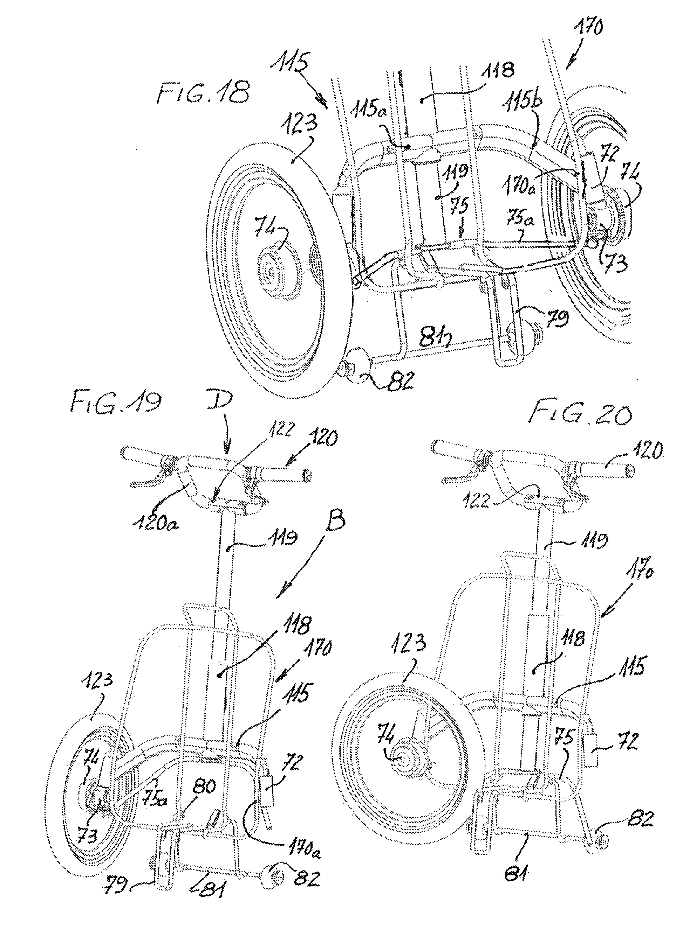

Comme le montre en détail la figure 18, le châssis 115 de la partie avant B présente en vue de dessus la forme générale d'un U à ailes évasées 115 b et dont l'âme 115a est disposée transversalement et est fixée à la base du fourreau de direction 118.

L'extrémité de chaque aile 115b est solidaire d'un palier sensiblement vertical 72 dans lequel est monté pivotant un axe, non visible mais solidaire d'un corps 73 portant la fusée, non représentée, sur laquelle est articulé le moyeu 74 de la roue correspondante 123.

La figure 19 montre que le tube de direction 119, monté pivotant dans le fourreau 118, est lié à son extrémité inférieure à l'âme d'une ferrure de commande 75. Celle ci présente une forme générale en U dont les extrémités des ailes 75a sont attelées avec articulation aux corps 73. Ainsi, toute rotation communiquée au tube de direction 119 par le guidon 120 se transmet aux deux corps 73 et aux roues 123.

La partie centrale du guidon 120 est en forme d'anneau 120a et est liée au tube 119 par de moyens de blocage 122 permettant son pivotement entre :
- une position d'utilisation en cycle, montrée à la figure 19,
- et une position de calage de la partie arrière B, dans laquelle il est tourné vers l'arrière et entoure l'extrémité avant du tube inférieur 103 et les moyens de liaison C qu'il porte.

Dans cette réalisation les moyens D de maintien de la partie arrière A sont donc constitués pour l'essentiel par l'anneau 120a du guidon 120.

Les figures 15 à 17 montrent que les moyens de liaison C entre les deux parties du cycle comprennent :
- un patin 77 fixé verticalement à l'extrémité avant du tube inférieur 103,
- et des crans 78 saillant vers l'arrière du fourreau de direction 118 et aptes à crocheter le profil interne du patin 77 au moyen d'une lamelle ressort de rappel.

Les figures 18 à 20 montrent, à plus grande échelle, que le panier 170 de réception d'une charge ou d'un sac indépendant est constitué par un fil métallique plié en forme de siège baquet et présentant deux montants 170a et un arceau transversal 170b. Les deux montants 170a sont soudés contre les paliers verticaux 72 de la partie avant B, tandis que l'arceau inférieur 170b est solidaire d'une patte 79, coudée vers le bas et constituant l'un des éléments de la béquille E.

Comme montré aux figures 15 à 17, les montants 170a sont munis sur leur partie arrière de deux paliers horizontaux 80 dans lesquels sont articulées les branches latérales 149a d'un berceau 149 apte à recevoir la roue arrière 109. Les extrémités libres des deux branches 149a sont reliées par une traverse 81 portant deux roulettes 82 d'appui au sol et constituant le deuxième élément de la béquille E.

Le berceau 149 peut occuper deux positions :
- une position escamotée, montrée figure15, dans laquelle il est redressé vers le haut contre le châssis de la partie avant et est verrouillé par une lame élastique 83, saillant du fourreau 118 et s'encliquetant sur la traverse 81,
- et une position d'utilisation, montrée figures 16 à 21, dans laquelle ses roulettes 82 sont en appui sur le sol et il est calé, par encliquetage d'une traverse intermédiaire 84 avec une lame de verrouillage 85 saillant du panier 170.

Le passage de la configuration cycle, montrée figure 15, à la configuration chariot à provision, montrée figure 21, s'effectue :
- en déplaçant l'extrémité du tube 103 verticalement vers le haut, (figure 16), pour désolidariser la partie arrière B de la partie avant A,
- en abaissant le berceau 149, avec vérification de son verrouillage par la lame 85,
- en reprenant la partie arrière A, d'abord pour l'éloigner longitudinalement de la partie avant B, comme montré figure 16, puis pour la dresser verticalement avec la roue 109 tournée vers le bas,
- en engageant cette roue arrière 109 dans le berceau 149, comme montré à la figure 21,
- puis en verrouillant cet assemblage par rabattement de l'anneau 120a du guidon autour de l'extrémité libre du tube 103 avec son patin 77.

Dans cette configuration, le chariot peut être déplacé comme celui de la forme d'exécution précédente en procurant les mêmes avantages.

Dans une variante de réalisation, montrée figure 20, le tube de direction 119 est aussi monté coulissant verticalement dans son fourreau 118 de manière que son extrémité inférieure puisse venir à un niveau inférieur à celui des axes de rotation horizontaux des roues 123. Quand le tube 119 est amené à ce niveau inférieur, il en résulte un déplacement vertical de la ferrure 75 dont les branches 75a, retenues par leurs extrémités à un niveau supérieur, génèrent sur les corps 73 portes fusées, un tirage vers l'arrière, provoquant le pivotement des deux roues 123 et leur repliement contre la partie arrière du chariot.

Cette configuration, visible à la figure 20, réduit l'encombrement transversal du chariot et facilite son rangement dans un placard ou dans le coffre d'un véhicule.

Bien entendu, quand le cycle est en configuration chariot porte commissions ou cycle des moyens de calage, non représentés et par exemple à déverrouillage manuel par billes à ressort, s'opposent aux coulissements longitudinaux relatifs du tube 119 dans le fourreau 118.

## Revendications

1. Cycle pliable transformable en chariot à provisions, le dit cycle comprenant deux parties séparables, à savoir une partie arrière A équipée des moyens d'entraînement (10 à 12) d'une roue arrière (9; 109) et de moyens d'assise (4 à 6), et une partie avant B avec guidon (20) et panier à provisions (70), ces deux parties étant solidarisables par des moyens de liaison C actionnables manuellement, **caractérisé en ce que** la partie avant B :
- a) repose sur deux roues avant (23, 123), montées libres en rotation autour d'axes horizontaux, espacées transversalement et portées par des moyens (17) qui, permettant le pivotement de ces roues autour d'axes verticaux dans un châssis transversal (15, 115), sont liés en rotation l'un à l'autre et au guidon (20, 120),
- b) présente en saillie vers l'arrière du châssis (15, 115), et de manière distincte des moyens de liaison C avec sa partie arrière A, des moyens D de réception et de maintien d'un élément tubulaire (3,103) de sa partie arrière A, alors à l'état démonté,
- et, c) supporte une béquille articulée E pouvant occuper :
● soit une position de rangement, dans laquelle elle est escamotée,
● soit une position d'utilisation, dans laquelle elle est déployée et vient en contact avec le sol par l'intermédiaire d'un sabot ou berceau transversal (49, 149),
le dit sabot ou berceau (49, 149) étant apte à recevoir la roue arrière (9, 109) du cycle, quand cette partie arrière A du cycle est séparée de la partie avant B et est plaquée contre cette dernière.

2. Cycle pliable transformable en chariot à provisions, selon la revendication 1 **caractérisé en ce que** les moyens de pivotement des roues (23) de la partie avant B autour d'axes verticaux sont des fourches (17) et chacune d'elles est solidaire d'un levier (24) tourné vers l'arrière et reliés, par une articulation verticale (27) et par des biellettes horizontales (26), à un levier de commande (28) calé sur la tige de direction (19) solidaire du guidon (20).

3. Cycle pliable transformable en chariot à provisions, selon la revendication 1 **caractérisé en ce que** les moyens de pivotement des deux roues (123) de la partie avant B autour d'axes verticaux sont des corps (73) articulés dans des dans des paliers verticaux du châssis (115) et portant des fusées sur lesquelles sont montés les moyeux des dites roues, chaque corps (73) étant relié par une articulation à l'une des ailes (75a) d'une ferrure de commande (75), dont l'âme est liée au tube de direction (119).

4. Cycle pliable transformable en chariot à provisions, selon la revendication 1 **caractérisé en ce que** les moyens C assurant la liaison des deux parties A et B du cycle en configuration « cycle », comprennent :
- à l'extrémité avant du tube inférieur(103) de la partie arrière A du cycle, un patin d'accrochage (77),
- et, sur le fourreau de direction (118) et en saillie vers l'arrière, des crans d'accrochage (78) aptes à recevoir et fixer le patin (77), et à s'en détacher dans une autre configuration.

5. Cycle pliable transformable en chariot à provisions, selon la revendication 1 **caractérisé en ce que** les moyens D qui, en configuration chariot, assurent la réception et le maintien de l'élément tubulaire (3) de la partie arrière A du cycle sont constitués par deux mâchoires (32) disposées à l'arrière du tube de direction (18) et munies de moyens (40, 41) de serrage et de desserrage.

6. Cycle pliable transformable en chariot à provisions, selon la revendication 1 **caractérisé en ce que** les moyens D qui, en configuration chariot, assurent le maintien de l'élément tubulaire (3) de la partie arrière A du cycle sont constitués par la partie centrale du guidon (120) qui, en forme d'anneau 120a, est liée au tube de direction (119) par de moyens de blocage (122) permettant de l'amener dans une position de calage de la partie arrière B, dans laquelle il est tourné vers l'arrière et entoure l'extrémité avant du tube inférieur (103) et les moyens de liaison C qu'il porte.

7. Cycle transformable en chariot à provisions, selon la revendication 1 **caractérisé en ce que** la béquille E comprend :
- un premier levier (45) articulé par son extrémité avant sur le châssis avant (15) du cycle, avec possibilité de pivotement dans le plan vertical,
- un deuxième levier (46), dont l'extrémité avant est articulée à l'extrémité arrière du premier levier, et dont l'extrémité arrière porte le sabot (49) par une articulation longitudinale (48) permettant, en position d'appui au sol, d'amener ce sabot transversalement de part et d'autre du plan médian vertical et longitudinal du chariot,
- des moyens de verrouillage (56 et 59) du premier levier (45) dans une position « cycle », dans laquelle le sabot (49) est sous le tube diagonal (3) du cadre et dans son alignement vertical,
- et, des moyens (62, 63) à actionnement manuel de déverrouillage des moyens de verrouillage précité.

8. Cycle pliable transformable en chariot à provisions, selon la revendication 1 **caractérisé en ce que** le sabot (49) comporte au moins une roulette (50) apte, quand la béquille est déployée, à venir en contact avec le sol pour former avec les roues avant (23) du cycle, d'une part, un stabilisateur et, d'autre part un troisième point d'appui et de roulement, espacé des roues avant.

9. Cycle pliable transformable en chariot à provisions, selon la revendication 1 **caractérisé en ce que** la partie avant B du cycle comporte en avant du tube de direction (18) une console repliable (64) composée d'un plateau articulé et rabattable (66) et, éventuellement, d'un rebord avant (67) articulé et rabattable contre le plateau (66), la dite console pouvant occuper soit une position de repos repliée contre le châssis (15), soit une position d'accueil d'une charge ou d'un panier à commissions (70), avec ou sans roulettes (71).

10. Cycle pliable transformable en chariot à provisions, selon la revendication 1 **caractérisé en ce que** la béquille E comprend :
- une patte coudée (79) saillant vers le bas à partir de l'arceau transversal avant 170b d'un panier (170) lié au châssis (115) de la partie avant B du cycle, et
- un berceau (149) de réception de la roue arrière (109) du cycle, le dit berceau (149) étant articulé autour d'un axe transversal et dans des paliers (80) disposés à l'arrière du panier (170) avec possibilité de pivotement entre deux positions verrouillées, mais déverrouillable manuellement, une position escamotée, repliée contre le panier, et une position d'utilisation dans laquelle les roulettes (82) dont il est muni sont en appui sur le sol.

11. Cycle pliable transformable en chariot à provisions, selon les revendications 1 et 3 prises ensemble, **caractérisé en ce que** le tube de direction (119) est monté coulissant verticalement dans son fourreau (118), de manière que, en configuration de rangement, son extrémité inférieure puisse venir à un niveau inférieur à celui des axes de rotation horizontaux des roues arrière (123), en provoquant par les branches (75a) de la ferrure de commande de direction (75) le pivotement des corps (73) porte fusée et celui des deux roues arrière (123), jusqu'à leur repliement contre la partie arrière du chariot.

## Patentansprüche

1. In einen Einkaufswagen umwandelbares Klapprad, wobei das Fahrrad zwei trennbare Teile enthält, nämlich einen hinteren Teil A, der mit Antriebseinrichtungen (10 bis 12) eines Hinterrads (9, 109) und mit Sitzeinrichtungen (4 bis 6) ausgestattet ist, und einen vorderen Teil B mit einem Lenker (20) und einem Einkaufskorb (70), wobei diese zwei Teile durch manuell betätigbare Verbindungseinrichtungen C fest miteinander verbunden werden können,
**dadurch gekennzeichnet, dass** der vordere Teil B:
- a) auf zwei Vorderrädern (23, 123) ruht, die um waagrechte Achsen drehfrei montiert, in Querrichtung beabstandet sind und von Einrichtungen (17) getragen werden, die, während sie das Schwenken dieser Räder um senkrechte Achsen in einem Quergestell (15, 115) erlauben, in Drehung miteinander und mit dem Lenker (20, 120) verbunden sind,
- b) zur Rückseite des Gestells (15, 115) vorstehend und getrennt von den Verbindungseinrichtungen C mit seinem hinteren Teil A, Einrichtungen D zur Aufnahme und zum Halt eines rohrförmigen Elements (3, 103) seines hinteren Teils A aufweist, der dann im ausgebauten Zustand ist,
- und c) einen angelenkten Ständer E trägt, der einnehmen kann:
● entweder eine Verstauungsstellung, in der er eingezogen ist,
● oder eine Nutzungsstellung, in der er ausgeklappt ist und über einen Querfuß oder eine Querhalterung (49, 149) mit dem Boden in Kontakt kommt,
wobei der Fuß oder die Halterung (49, 149) das Hinterrad (9, 109) des Fahrrads aufnehmen kann, wenn dieser hintere Teil A des Fahrrads vom vorderen Teil B getrennt und gegen diesen letzteren gedrückt ist.

2. In einen Einkaufswagen umwandelbares Klapprad nach Anspruch 1, **dadurch gekennzeichnet, dass** die Schwenkeinrichtungen der Räder (23) des vorderen Teils B um senkrechte Achsen Gabeln (17) sind, und jede von ihnen fest mit einem nach hinten gerichteten Hebel (24) verbunden ist, und durch ein senkrechtes Gelenk (27) und durch waagrechte Verbindungsstangen (26) mit einem Steuerhebel (28) verbunden sind, der auf der fest mit dem Lenker (20) verbundene Lenkstange (19) fixiert ist.

3. In einen Einkaufswagen umwandelbares Klapprad nach Anspruch 1, **dadurch gekennzeichnet, dass** die Schwenkeinrichtungen der zwei Räder (123) des vorderen Teils B um senkrechte Achsen Körper (73) sind, die in senkrechten Lagern des Gestells (115) angelenkt sind und Achsschenkel tragen, auf die die Naben der Räder montiert sind, wobei jeder Körper (73) über ein Gelenk mit einem der Schenkel (75a) eines Steuerbeschlags (75) verbunden ist, dessen Mittelteil mit dem Lenkrohr (119) verbunden ist.

4. In einen Einkaufswagen umwandelbares Klapprad nach Anspruch 1, **dadurch gekennzeichnet, dass** die Einrichtungen C, die die Verbindung der zwei Teile A und B des Fahrrads in der Konfiguration « Fahrrad » gewährleisten, enthalten:
- am vorderen Ende des unteren Rohrs (103) des hinteren Teils A des Fahrrads einen Befestigungs-Gleitschuh (77),
- und auf dem Lenkmantelrohr (118) und nach hinten vorstehend Befestigungsrasten (78), die den Gleitschuh (77) aufnehmen und fixieren und sich davon in einer anderen Konfiguration lösen können.

5. In einen Einkaufswagen umwandelbares Klapprad nach Anspruch 1, **dadurch gekennzeichnet, dass** die Einrichtungen D, die in der Wagen-Konfiguration die Aufnahme und den Halt des rohrförmigen Elements (3) des hinteren Teils A des Fahrrads gewährleisten, aus zwei Klemmbacken (32) bestehen, die an der Rückseite des Lenkrohrs (18) angeordnet und mit Einrichtungen (40, 41) zum Spannen und Lösen versehen sind.

6. In einen Einkaufswagen umwandelbares Klapprad nach Anspruch 1, **dadurch gekennzeichnet, dass** die Einrichtungen D, die in der Wagen-Konfiguration den Halt des rohrförmigen Elements (3) des hinteren Teils A des Fahrrads gewährleisten, aus dem zentralen Teil des Lenkers (120) bestehen, der in Form eines Rings (120a) mit dem Lenkrohr (119) durch Blockiereinrichtungen (122) verbunden ist, die es ermöglichen, ihn in eine Klemmstellung des hinteren Teils B zu bringen, in der er nach hinten gedreht ist und das vordere Ende des unteren Rohrs (103) und die Verbindungseinrichtungen C, die er trägt, umgibt.

7. In einen Einkaufswagen umwandelbares Fahrrad nach Anspruch 1, **dadurch gekennzeichnet, dass** der Ständer E enthält:
- einen ersten Hebel (45), der mit seinem vorderen Ende an das vordere Gestell (15) des Fahrrads angelenkt ist, mit einer Schwenkmöglichkeit in der senkrechten Ebene,
- einen zweiten Hebel (46), dessen vorderes Ende an das hintere Ende des ersten Hebels angelenkt ist, und dessen hinteres Ende den Fuß (49) über ein Längsgelenk (48) trägt, das es in der Auflagestellung auf dem Boden erlaubt, diesen Fuß quer auf beide Seiten der senkrechten und längs verlaufenden Mittelebene des Wagens zu bringen,
- Verriegelungseinrichtungen (56 und 59) des ersten Hebels (45) in einer « Fahrrad »-Stellung, in der der Fuß (49) sich unter dem diagonalen Rohr (3) des Rahmens und in seiner senkrechten Fluchtung befindet,
- und Einrichtungen (62, 63) mit manueller Betätigung der Entriegelung der erwähnten Verriegelungseinrichtungen.

8. In einen Einkaufswagen umwandelbares Klapprad nach Anspruch 1, **dadurch gekennzeichnet, dass** der Fuß (49) mindestens ein Rädchen (50) aufweist, das, wenn der Ständer ausgeklappt ist, mit dem Boden in Kontakt kommen kann, um mit den Vorderrädern (23) des Fahrrads einerseits einen Stabilisator und andererseits einen dritten Auflage- und Rollpunkt zu formen, der einen Abstand zu den Vorderrädern hat.

9. In einen Einkaufswagen umwandelbares Klapprad nach Anspruch 1, **dadurch gekennzeichnet, dass** der vordere Teil B des Fahrrads vor dem Lenkrohr (18) eine zusammenklappbare Konsole (64) enthält, die aus einer angelenkten und umklappbaren Platte (66) und ggf. einer angelenkten und gegen die Platte (66) umklappbaren vorderen Randleiste (67) besteht, wobei die Konsole entweder eine gegen das Gestell umgeklappte Ruhestellung (15) oder eine Aufnahmestellung einer Last oder eines Einkaufskorbs (70) mit oder ohne Röllchen (71) einnehmen kann.

10. In einen Einkaufswagen umwandelbares Klapprad nach Anspruch 1, **dadurch gekennzeichnet, dass** der Ständer E enthält:
- eine gekrümmte Lasche (79), die ausgehend vom vorderen Querbügel (170b) eines mit dem Gestell (115) des vorderen Teils B des Fahrrads verbundenen Korbs (170) nach unten vorsteht, und
- eine Halterung (149) zur Aufnahme des Hinterrads (109) des Fahrrads, wobei die Halterung (149) um eine Querachse und in Lagern (80) angelenkt ist, die hinter dem Korb (170) mit der Möglichkeit des Schwenkens zwischen zwei verriegelten, aber manuell entriegelbaren Stellungen angeordnet sind, einer gegen den Korb zusammengeklappten eingezogenen Stellung und einer Nutzungsstellung, in der die Rädchen (82), mit denen sie versehen ist, auf dem Boden in Auflage sind.

11. In einen Einkaufswagen umwandelbares Klapprad nach den Ansprüchen 1 und 3 zusammen genommen, **dadurch gekennzeichnet, dass** das Lenkrohr (119) senkrecht gleitend in sein Mantelrohr (118) montiert ist, damit in der Verstauungskonfiguration sein unteres Ende auf eine niedrigere Ebene als diejenige der waagrechten Drehachsen der Hinterräder (123) kommen kann, indem durch die Schenkel (75a) des Lenksteuerbeschlags (75) das Schwenken der Achsschenkelträgerkörper (73) und dasjenige der zwei Hinterräder (123) bis zu ihrem Zusammenklappen gegen den hinteren Teil des Wagens bewirkt wird.

## Claims

1. Foldable cycle that is convertible into a shopping trolley, said cycle comprising two separable parts, namely a rear part A equipped with driving means (10 to 12) for a rear wheel (9, 109) and seat means (4 to 6), and a front part B having a handlebar (20) and a shopping basket (70), these two parts being able to be secured together by manually actuable connecting means C,
**characterized in that** the front part B:
- a) rests on two front wheels (23, 123) that are mounted so as to be free to rotate about horizontal axes, are spaced apart transversely and are carried by means (17) which, while enabling these wheels to pivot about vertical axes in a transverse framework (15, 115), are connected together and to the handlebar (20, 120) in terms of rotation,
- b) has, projecting towards the rear of the framework (15, 115) and in a separate manner from the means C for connecting to its rear part A, means D for receiving and holding a tubular element (3, 103) of its rear part A, then in the disassembled state,
- and c) carries an articulated stand E that can take up:
● either a stowed position, in which it is retracted,
● or a use position, in which it is deployed and comes into contact with the ground via a transverse foot or cradle (49, 149),
said foot or cradle (49, 149) being able to receive the rear wheel (9, 109) of the cycle when this rear part A of the cycle is separated from the front part B and is pressed against the latter.

2. Foldable cycle that is convertible into a shopping trolley according to Claim 1, **characterized in that** the means for pivoting the wheels (23) of the front part B about vertical axes are forks (17) and each of these is secured to a lever (24) that is turned towards the rear and connected, by a vertical articulation (27) and by horizontal connecting rods (26), to a control lever (28) fitted on the steering rod (19) secured to the handlebar (20).

3. Foldable cycle that is convertible into a shopping trolley according to Claim 1, **characterized in that** the means for pivoting the two wheels (123) of the front part B about vertical axes are bodies (73) that are articulated in vertical bearings of the framework (115) and carry spindles on which the hubs of said wheels are mounted, each body (73) being connected by an articulation to one of the legs (75a) of a control fitting (75), the core of which is connected to the steering tube (119).

4. Foldable cycle that is convertible into a shopping trolley according to Claim 1, **characterized in that** the means C for connecting the two parts A and B of the cycle in the "cycle" configuration comprise:
- at the front end of the lower tube (103) of the rear part A of the cycle, a coupling shoe (77),
- and, on the steering shaft (118) and projecting towards the rear, coupling notches (78) that are able to receive and fix the shoe (77) and to be detached therefrom in a different configuration.

5. Foldable cycle that is convertible into a shopping trolley according to Claim 1, **characterized in that** the means D which, in the trolley configuration, receive and hold the tubular element (3) of the rear part A of the cycle consist of two jaws (32) that are disposed at the rear of the steering tube (18) and are provided with clamping and releasing means (40, 41).

6. Foldable cycle that is convertible into a shopping trolley according to Claim 1, **characterized in that** the means D which, in the trolley configuration, hold the tubular element (3) of the rear part A of the cycle are formed by the central part of the handlebar (120) which, in the form of a ring (120a), is connected to the steering tube (119) by blocking means (122) that make it possible to bring it into a wedging position of the rear part B, in which it is turned towards the rear and surrounds the front end of the lower tube (103) and the connecting means C which it carries.

7. Foldable cycle that is convertible into a shopping trolley according to Claim 1, **characterized in that** the stand E comprises:
- a first lever (45) articulated by its front end on the front framework (15) of the cycle, with the possibility of pivoting in the vertical plane,
- a second lever (46), the front end of which is articulated to the rear end of the first lever and the rear end of which carries the foot (49) by way of a longitudinal articulation (48) that makes it possible, in the position resting on the ground, to move this foot transversely to either side of the vertical and longitudinal mid-plane of the trolley,
- means (56 and 59) for locking the first lever (45) in a "cycle" position in which the foot (49) is under the diagonal tube (3) of the frame and vertically aligned therewith,
- and manually actuated means (62, 63) for unlocking the abovementioned locking means.

8. Foldable cycle that is convertible into a shopping trolley according to Claim 1, **characterized in that** the foot (49) has at least one castor (50) which is able, when the stand is deployed, to come into contact with the ground in order to form, with the front wheels (23) of the cycle, firstly a stabilizer and secondly a third supporting and bearing point which is spaced apart from the front wheels.

9. Foldable cycle that is convertible into a shopping trolley according to Claim 1, **characterized in that** the front part B of the cycle has, in front of the steering tube (18), a foldable bracket (64) composed of an articulated plate (66) that can be folded back, and optionally an articulated front lip (67) that can be folded back against the plate (66), said bracket being able to take up either a rest position in which it is folded against the framework (15) or a position for receiving a load or a shopping basket (70), with or without castors (71).

10. Foldable cycle that is convertible into a shopping trolley according to Claim 1, **characterized in that** the stand E comprises:
- a curved leg (79) that projects downwardly from the front transverse bar (170b) of a basket (170) connected to the framework (115) of the front part B of the cycle, and
- a cradle (149) for receiving the rear wheel (109) of the cycle, said cradle (149) being articulated about a transverse axis and in bearings (80) disposed at the rear of the basket (170) with the possibility of pivoting between two locked, but manually unlockable, positions, a retracted position, folded back against the basket, and a use position in which the castors (82) with which it is fitted rest against the ground.

11. Foldable cycle that is convertible into a shopping trolley according to Claims 1 and 3 taken together, **characterized in that** the steering tube (119) is mounted so as to slide vertically in its shaft (118), such that, in the stowed position, its lower end can move to a lower level than that of the horizontal rotation axes of the rear wheels (123), causing, by way of the limbs (75a) of the steering control fitting (75), the spindle-carrying bodies (73) and the two rear wheels (123) to pivot until they are folded against the rear part of the trolley.
